Europäisches Patentamt

European Patent Office

Office européen des brevets

(19)

(11) Numéro de publication: **0 042 785**
**A1**

(12) # DEMANDE DE BREVET EUROPEEN

(21) Numéro de dépôt: **81400951.0**

(22) Date de dépôt: **16.06.81**

(51) Int. Cl.³: **G 01 S 7/40**
G 06 F 15/20, G 06 G 7/78
G 09 B 9/00

(30) Priorité: **20.06.80 FR 8013687**

(43) Date de publication de la demande:
**30.12.81 Bulletin 81/52**

(84) Etats contractants désignés:
**DE GB IT NL SE**

(71) Demandeur: **ETAT-FRANCAIS représenté par le DELEGUE GENERAL POUR L'ARMEMENT**
**Bureau des Brevets et Inventions de la Délégation Générale pour l'Armement 14, rue Saint-Dominique F-75997 Paris Armées(FR)**

(72) Inventeur: **Biolley, Alain**
**6, rue A. Rivoire**
**F-92240 Malakoff(FR)**

(54) **Procédé et dispositif pour la simulation d'échos radar.**

(57) Des paramètres d'identification d'une cible et d'un fond sont appliqués à une unité de traitement numérique 2 travaillant en asynchronisme par rapport au radar de réception 4 pour délivrer à un générateur d'échos 1 des signaux de cible et de fond dépendant de facteur dont la fréquence d'évolution est inférieure à la fréquence de récurrence du radar 4. Le circuit analogique 1 fonctionnant en synchronisme avec l'émission du radar produit des signaux analogiques dont l'évolution s'effectue à une fréquence supérieure à la fréquence de récurrence du radar et combine ces signaux avec les signaux issus de l'unité 2 pour former des signaux hyperfréquences de sortie modulés en amplitude, phase et durée et représentatifs d'échos de la cible et du fond simulés.

Application notamment à l'aéronautique.

Fig.1

EP 0 042 785 A1

Procédé et dispositif pour la simulation d'échos radar

La présente invention a pour objet un procédé et un dispositif pour la simulation d'échos hyperfréquences de cibles en mouvement pour l'observation des échos à l'aide d'un radar à impulsions, les signaux produits simulant, d'une part, les échos provenant d'au moins une cible mobile prédéterminée et, d'autre part, les échos provenant d'au moins un fond tel qu'un fouillis de mer, d'atmosphère ou de terre.

On connaît déjà des appareils de mesure hyperfréquences permettant d'injecter dans un récepteur radar des signaux calibrés. De tels appareils permettent de conduire certains tests visant à surveiller le bon fonctionnement du radar mais ne peuvent pas donner lieu à une modulation susceptible de simuler des conditions réelles de détection et par suite ne peuvent pas servir à un entraînement opérationnel du personnel chargé de l'utilisation du radar.

On a par ailleurs déjà réalisé des simulateurs radar fournissant des signaux vidéo qui sont directement appliqués au dispositif de visualisation du radar. Ces simulateurs vidéo sont utilisés soit simultanément avec un radar qui fonctionne en émission pour fournir un signal vidéo réél correspondant au fond alors présent dans le champ du radar, le simulateur vidéo ne produisant lui-même que des échos de cible, soit simultanément avec un radar dont seul le dispositif de visualisation est mis en service, le simulateur vidéo produisant alors à la fois un nombre limité d'échos de cible et un bruit vidéo superposé.

Dans les deux cas, les solutions apportées se sont avérées peu satisfaisantes. En effet, dans le cas de la simulation des seuls échos de cible par un simulateur vidéo, ces échos sont beaucoup trop
facilement identifiables en tant qu'échos simulés,
et la nécessité d'utiliser le radar en émission pour
produire un bruit de fond réel est un inconvénient,
car les caractéristiques de ce bruit de fond ne
peuvent pas être modifiées à volonté. Par ailleurs, dans
le cas où l'on produit directement un signal vidéo
simulant à la fois les échos de cible et le bruit de
fond ou fouillis, les conditions réelles d'interférences entre échos de cible et fouillis qui existent
en fréquences radar ne sont pas reproduites et il
n'est donc pas non plus possible d'obtenir une simulation satisfaisante. De plus, dans ce dernier cas,
l'action des circuits de réception du radar, et de
l'antenne n'est pas prise en compte alors même que
ces éléments modifient toujours fortement les signaux
détectés dans les conditions réelles de fonctionnement.

La présente invention vise précisément à
remédier aux inconvénients précités et à permettre de
délivrer de façon simple à un radar dont seule la
réception est en fonctionnement, des échos en hyperfréquences caractéristiques de cibles en mouvement
sur divers fonds de fouillis et reproduisant avec fidélité les conditions réelles de fonctionnement.

Ces buts sont atteints grâce à un procédé
de simulation d'échos hyperfréquences de cibles en
mouvement pour l'observation des échos à l'aide d'un
radar à impulsions, procédé selon lequel on produit,
d'une part, des signaux simulant les échos provenant
d'au moins une cible prédéterminée et, d'autre part,
des signaux représentatifs d'au moins un fond tel
qu'un fouillis de mer, d'atmosphère ou de terre,
caractérisé en ce que, à l'aide des paramètres d'identification de la cible tels que la surface équivalente
moyenne, la position initiale, le vecteur vitesse et l'altitude, des paramètres relatifs au fond tels que le type, la position initiale, le vecteur vitesse et la forme du fond, et des données relatives au radar d'observation telles que les caractéristiques de rayonnement de l'antenne et la durée d'impulsion et, le cas échéant, les informations relatives au déplacement du support de radar, on produit en asynchronisme par rapport au radar des premiers signaux numériques caractéristiques de chaque cible et de chaque fond et prenant en compte l'ensemble des paramètres dont la fréquence d'évolution est inférieure à la fréquence de récurrence du radar, en ce que l'on convertit sous forme analogique lesdits premiers signaux numériques pour former des premiers signaux analogiques, en ce que l'on produit directement des seconds signaux analogiques caractéristiques de chaque cible et de chaque fond et prenant en compte l'ensemble des paramètres dont la fréquence d'évolution est supérieure à la fréquence de récurrence du radar, en ce que l'on combine les premiers et seconds signaux analogiques, à une fréquence pilotée par l'oscillateur local hyperfréquence de réception du radar, et en réalisant une synchronisation à partir des signaux de synchronisation d'émission du radar pour former des signaux hyperfréquences de sortie modulés en amplitude, phase et durée et représentatifs des échos de cible et du fond simulés, et en ce que l'on applique les signaux hyperfréquences de sortie à l'antenne du radar lui-même en position de réception ou d'émission-réception.

De façon avantageuse, les premiers signaux numériques comprennent également des signaux prenant en compte des paramètres dont la période d'évolution est voisine de la période de récurrence du radar et ces signaux sont délivrés lors d'interruptions commandées par les signaux de synchronisation du radar.

Selon une caractéristique particulière, on synchronise l'émission de signaux hyperfréquences de sortie avec un léger retard, caractéristique de la distance à laquelle se trouvent les échos que l'on doit simuler pendant la récurrence, par rapport à l'émission des impulsions de synchronisation du radar.

L'invention a encore pour objet un simulateur d'échos hyperfréquences de cibles en mouvement pour l'observation des échos à l'aide d'un radar à impulsions qui comprend notamment un oscillateur local de réception, une antenne orientable, des moyens de synchronisation de l'émission et des moyens de visualisation , simulateur caractérisé en ce qu'il comprend une première chaîne de traitement numérique comprenant un processeur, des mémoires et des circuits d'interface et prévue pour recevoir, d'une part, des données relatives au radar telles que la position de l'antenne, la durée d'impulsions, d'autre part, des données relatives à au moins une cible prédéterminée et à au moins un fond ou fouillis, et pour fournir une pluralité de signaux numériques comprenant pour chaque cible et chaque fond au moins un signal de niveau d'écho et un signal de position d'écho ; et une deuxième chaîne de traitement analogique à laquelle sont appliqués, d'une part, les signaux fournis par ladite première chaîne de traitement et, d'autre part, des signaux issus du radar comprenant au moins le signal de synchronisation de l'émission du radar et le signal issu de l'oscillateur local hyperfréquence de la réception ; et en ce que la deuxième chaîne de traitement analogique comprend des circuits de conversion numérique-analogique au moins des signaux numériques de niveau d'écho issus de la première chaîne de traitement; un circuit chronomètre de simulation de distance auquel sont appliquées les impulsions de synchronisation du radar et destiné à fournir des impulsions de déclenchement des échos ; un générateur de bruit ; des filtres reliées au générateur de bruit pour fournir, pour chaque cible et chaque fond, au moins des signaux de bruit d'amplitude ; un oscillateur local hyperfréquence asservi sur l'oscillateur local de réception du radar, pour chaque cible et chaque fond, chaque oscillateur local étant associé à un circuit de commande automatique de fréquence et à un mélangeur couplé à l'oscillateur local de réception du radar ; pour chaque cible et chaque fond, un circuit de combinaison du signal de bruit d'amplitude et du signal de niveau d'écho issu du circuit de conversion numérique-analogique correspondant, des circuits atténuateurs commandés associés à des circuits de commande en fonction de lois de commande prédéterminées pour chaque signal analogique de position et de niveau ; des moyens de couplage du signal de l'oscillateur local correspondant et des signaux analogiques de niveau et de position pour chaque cible et chaque fond ; une jonction hybride pour la combinaison des signaux résultant de chaque voie de la deuxième chaîne de traitement correspondant à une cible ou à un fond et des moyens pour injecter le signal de sortie combiné issu de la jonction hybride dans la chaîne de réception du radar.

Chaque voie de la deuxième chaîne de traitement comprend un circuit de commande de durée d'écho recevant un signal, d'une part, de la première chaîne de traitement et, d'autre part, du circuit chronomètre et associé à des moyens d'interrupteur pour interrompre le signal combiné de la voie correspondante en temps prédéterminé après le début d'un écho.

La deuxième chaîne de traitement comprend en outre, pour chaque voie de cible ou de fond, un filtre générateur de bruit de tension de valeur moyenne nulle dont la sortie est reliée au circuit de commande automatique de fréquence pour introduire un bruit de phase désiré sur l'oscillateur local correspondant, et des moyens de conversion numérique-analogique pour appliquer au circuit de commande automatique de fréquence de l'oscillateur local correspondant un signal de commande décalant celui-ci en fréquence de la valeur du doppler désiré, la première chaîne de traitement déterminant cette valeur à partir de données d'entrée relatives à la cinématique des éléments mobiles.

Selon un mode particulier de réalisation, un circuit atténuateur commun commandé par un circuit de commande relié au circuit chronomètre peut être disposé en aval de la jonction hybride.

Selon une autre caractéristique particulière, les circuits atténuateurs commandés sont constitués par des diodes pin et lesdits moyens de couplage d'un signal d'oscillateur local et des signaux analogiques correspondants de niveau, de position d'écho et, le cas échéant, de durée d'écho comprennent des circuits circulateurs.

Ainsi, selon l'invention, les échos sont modulés en amplitude, phase et durée pour reproduire des cibles, par exemple aériennes, connues, la cinématique des cibles et les caractéristiques de rayonnement de l'antenne étant prises en compte.

Le simulateur reçoit du radar l'information de position instantanée de l'aérien, le signal de synchronisation du radar et le signal de l'oscillateur local hyperfréquence.

La mise en oeuvre du simulateur implique en outre la prise en compte des informations liées aux cibles, aux fouillis et au porteur du radar dans le cas où ce dernier est censé être mobile. Il est possible de simuler divers types de fonds tels que des nuages, de la houle, de la mer, du vent, un relief particulier.

On notera que le simulateur met en oeuvre des moyens analogiques et informatiques. Les moyens informatiques effectuent les calculs d'après les ordres de mise en oeuvre et fournissent aux moyens analogiques des mots de commande que ces derniers convertissent pour se prépositionner . La synchronisation radar déclenche le fonctionnement des dispositifs analogiques aux instants et suivant les modalités ordonnées.

Le partage des taches analogiques et logiques permet de faire travailler de façon asynchrone le calculateur et le radar qui impose son rythme aux générateurs d'échos. Le simulateur est ainsi facilement adaptable à des radars différents présentant des rythmes différents d'émission.

La conception modulaire du simulateur selon l'invention est également remarquable dans la mesure où une voie de traitement indépendante est réservée pour la formation d'échos par une cible et par chaque type de fouillis (atmosphère, mer, terre).

D'autres caractéristiques et avantages de la présente invention ressortiront mieux de la description qui fait suite de modes particuliers de réalisation de l'invention, donnés uniquement à titre d'exemples non limitatifs en référence au dessin annexé sur lequel :

- la figure 1 est une vue schématique de principe du simulateur selon l'invention,

- la figure 2 est un schéma bloc de l'ensemble des éléments d'un simulateur selon l'invention, et

- la figure 3 est un graphe représentant un exemple de diverses courbes d'atténuation pouvant être utilisées avec le simulateur selon l'invention.

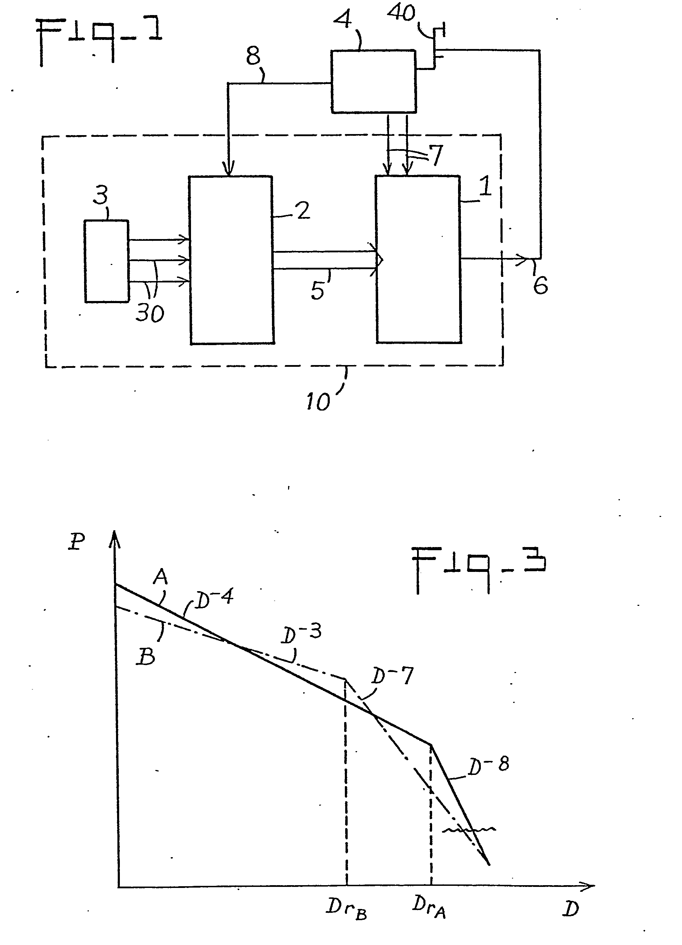

On voit sur la figure 1 le schéma de principe d'un simulateur 10 d'échos hyperfréquences coopérant avec un radar 4 à impulsions à fréquence fixe, ou piloté, c'est-à-dire, dont l'oscillateur local de réception est caractéristique de l'émission. Le simulateur 10 comprend un processeur 2 auquel sont appliqués par des liaisons 30 des données fournies par un opérateur à un circuit d'interface 3, et des signaux 8 provenant du radar 4 et donnant notamment la position angulaire de l'antenne rotative du radar 4. Les ordres issus du processeur 2 sont fournis par les liaisons 5 à un circuit analogique 1 générateur d'échos auquel sont appliqués également par des liaisons 7 des signaux issus du radar 4 et représentant notamment le signal de synchronisation d'émission et le signal de l'oscillateur local de réception. Le signal de sortie hyperfréquence fourni par le générateur d'échos 1 est lui-même appliqué à l'antenne 40 du radar 4. Dans le schéma de la figure 1, chaque ensemble 2 et 1 constitue une chaîne de traitement propre   respectivement numérique et analogique. Chaque chaîne de traitement comprend elle-même plusieurs voies relatives chacune à une cible donnée ou un fond de fouillis de type prédéterminé. Naturellement, dans une voie réservée à la simulation de cible, il sera possible de simuler plusieurs cibles différentes dans la mesure où deux d'entre elles ne se trouvent jamais dans une même cellule de résolution du radar.

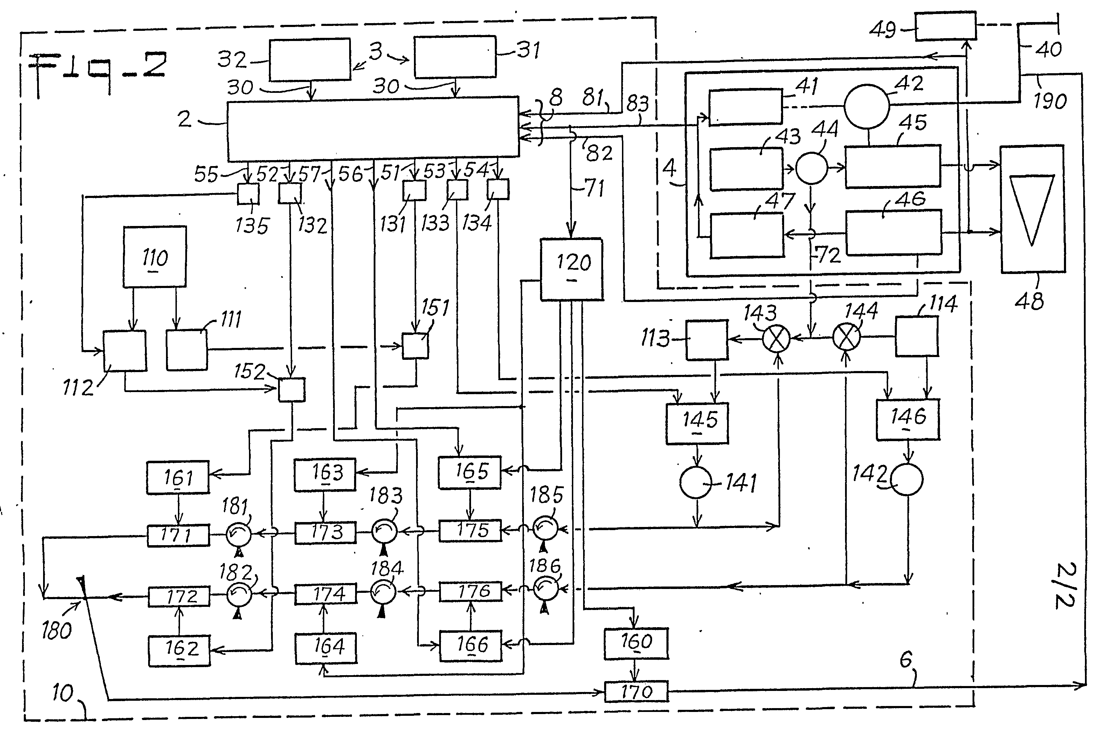

On a représenté, sur la figure 2, le schéma d'un simulateur dans lequel une première voie de traitement est relative à la formation d'échos d'une cible donnée et une seconde voie de traitement est relative à la formation d'échos d'un fouillis particulier. Naturellement, le simulateur pourrait comprendre d'autres voies simulaires supplémentaires relatives à d'autres cibles à observer simultanément ou à d'autres types de fouillis se superposant au premier fouillis.

Sur la figure 2, l'ensemble 4 représente le schéma d'un radar classique avec magnétron 41, circulateur 42, oscillateur local 44, circuit de commande automatique de fréquence 43 à tension constante, récepteur 45, programmateur 46 et modulateur 47. Un indicateur 48 de visualisation reçoit les signaux du circuit récepteur 45 et des signaux de synchronisation du circuit programmateur 46. Une antenne 40 est reliée au circulateur 42 et est actionnée par un mécanisme de commande d'antenne 49. Comme cela a déjà été précisé, le radar 4 peut être de différents types mais doit présenter une fréquence fixe, c'est-à-dire, que l'oscillateur local 44 doit être caractéristique de l'émission.

L'ensemble 2,3 qui constitue une première chaîne de traitement numérique du simulateur 10 comprend un microprocesseur 2 avec ses mémoires et interfaces associées et reçoit par les lignes 30 des données fournies par l'opérateur à l'interface 3 et qui se répartissent en données 31 de la voie de traitement relative à la formation d'échos de cible et en données 32 de la voie de traitement relative à la formation d'échos de fouillis.

Les données 31 concernant une cible comprennent essentiellement des informations sur le type de cible auquel est associée une surface équivalente moyenne $\sigma_m$ , une loi de fluctuation sur la position initiale, l'altitude, la vitesse et le cap. Ces informations permettent au microprocesseur 2 de calculer les variations des paramètres tels que la surface équivalente $\sigma$ en fonction de la position instantanée de la cible par rapport au radar, afin de déterminer les variations d'amplitude du signal-écho de la cible. Le processeur 2 détermine les variations lentes (inférieures à environ 1 Hz) de la surface équivalente $\sigma$ autour d'une valeur moyenne donnée, en fonction de la position instantanée de la cible, c'est-à-dire en fonction de son vecteur vitesse. Ces variations lentes (qui peuvent être par exemple de $\pm$ 8 dB) correspondent à la géométrie générale de l'avion. Des variations rapides, de l'ordre de quelques dizaines de Hz (et pouvant être par exemple de $\pm$ 4 dB), dues à la fluctuation de la cible se superposent dans la pratique aux variations lentes. Selon l'invention, le microprocesseur fournit sur sa sortie 51 de niveau d'écho de cible une valeur qui tient compte uniquement des variations lentes de la surface équivalente moyenne, c'est-à-dire qui peut être calculée à partir de la valeur moyenne $\sigma_m$ liée au type de cible et de la position relative radar-cible, dans la mesure où la loi de fluctuation de la cible est elle-même déterminée.

Les variations rapides de la surface équivalente et donc du niveau d'écho de la cible sont simulées en dehors de la chaîne de traitement numérique 2 et sont produites dans le générateur d'écho 1 proprement dit qui constitue une seconde chaîne de traitement analogique. Pour ce faire, un filtre 111 est connecté à un générateur de bruit 110 pour produire un bruit dans une bande de fréquence prédéterminée dépendant du type de cible à simuler. Le filtre 111 peut être par exemple un filtre de bande 80 Hz. Le bruit blanc produit par le filtre 111 constitue un bruit d'amplitude de la cible et est ajouté au niveau de l'additionneur 151 à un signal analogique de niveau d'écho de cible issu du convertisseur numérique-analogique 131 dont l'entrée est reliée à la sortie 51 du microprocesseur 2. La sortie 56 du microprocesseur 2 fournit elle-même un signal de position et de durée d'écho-cible. Enfin, la sortie 53 reliée au convertisseur numérique-analogique 133 fournit un signal de commande destiné à permettre la prise en compte de l'effet doppler dû à la cible.

Les données 32 relatives à la voie concernant un fouillis, qui sont fournies au microprocesseur 2 peuvent comprendre dans le cas d'un fouillis d'air des informations relatives au type, à la position initiale, au vecteur vitesse, à la forme et à l'étendue des nuages, ou dans le cas d'un fouillis de mer des informations relatives à la force de la mer, à l'amplitude de houle, à la période de houle, à la direction du vent, ainsi qu'à la distance de l'horizon.

Les sorties 52 et 54 du microprocesseur 2 fournissent des signaux numériques qui sont appliqués à des convertisseurs numériques-analogiques 132 et 134 respectivement et permettent de disposer à la sortie desdits convertisseurs respectivement un signal analogique de niveau d'écho de fouillis et un signal de commande destiné à permettre la prise en compte de l'effet doppler dû aux éléments mobiles du fouillis. La sortie 57 du microprocesseur 2 fournit un signal de position et de durée d'écho de fouillis. tandis que la sortie 55, reliée à un convertisseur numérique-analogique permet de fournir un signal de commutateur de largeur de bande qui commande la commutation des filtres commutables tels que le filtre 112 pour fournir, à partir du générateur de bruit 110, en sortie du filtre 112, un signal de bruit d'amplitude de fouillis qui est ajouté, dans le circuit additionneur 152 au signal analogique de niveau d'écho de fouillis disponible en sortie du convertisseur numérique-analogique 132.

Des données relatives à l'engin porteur de radar, telles que le cap, la vitesse, éventuellement l'altitude, sont également fournies à l'interface 3 dans le cas où ledit engin porteur est mobile.

Le microprocesseur 2 reçoit enfin des signaux issus directement du radar 4 et nécessaires pour l'élaboration des signaux fournis sur les sorties 51 à 57. Ces signaux qui sont appliqués sur les entrées 8 du microprocesseur 2 comprennent au moins un signal 81 représentatif de la position de l'antenne 40, c'est-à-dire fournissant l'angle $\theta$ de déviation de l'antenne orientable 40 et le sens de balayage de celle-ci. Ce signal 81 de position d'antenne peut être dérivé du signal de synchronisation issu du programmateur 46 du radar. Ce signal 81 peut également comprendre une information sur l'angle d'élévation qui intervient lors de la prise en compte de clutter au niveau du microprocesseur 2. Le signal 82 issu du programmateur 46 du radar fournit une indication de

la durée d'impulsion utilisée pour le cas où le même radar est capable de délivrer des impulsions de largeurs différentes correspondant à des fenêtres d'observation de dimensions différentes. A titre d'exemple, on peut utiliser un type de radar fournissant des impulsions de largeur soit de 1 $\mu$s, soit de 3,5 $\mu$s. Le signal 82 de sélection de distance dépendant de la durée d'impulsion permet notamment d'adapter les caractéristiques des filtres de bruit commutables.

On notera que le microprocesseur 2 n'est en aucune manière synchronisé avec le radar 4. Ainsi, le temps d'exécution d'un programme dans le microprocesseur 2 peut se dérouler totalement indépendamment de la synchronisation du radar, et le simulateur est ainsi susceptible d'être adapté à des radars de types différents, dans la mesure où ceux-ci ne sont pas à compression d'impulsions. Toutefois, le signal de synchronisation du radar peut être utilisé pour commander des interruptions du programme du microprocesseur et prendre en compte des informations un nombre entier de périodes de récurrence à l'avance. Ceci permet de réaliser des prépositionnements d'éléments en tenant compte d'informations fournies par le microprocesseur pour simuler des phénomènes dont la période est voisine de la période de récurrence du radar.

Le générateur d'échos 1 qui constitue une seconde chaîne de traitement analogique et reçoit les signaux de sorties 51 à 57 du microprocesseur 2, reçoit également du radar, comme cela a été expliqué en référence à la figure 1, un signal 71 de synchronisation de l'émission radar et un signal 72 issu de l'oscillateur local 44 de réception radar.

Le signal 71 est appliqué à un circuit chronomètre 120 qui constitue un élément important du générateur d'échos 1, et assure la commande des déclenchements d'échos pour chacune des voies correspondant à la production d'échos de cible ou d'échos de bruit de fond. Le circuit 120 de simulation de distance assure notamment la réalisation d'un léger retard prédéterminé, de l'ordre de quelques microsecondes à quelques millisecondes, caractéristique de la distance à laquelle se trouvent.les échos que l'on doit simuler pendant la récurrence, entre la synchronisation radar et l'émission de signaux.

Le signal 72 de l'oscillateur local 44 est appliqué, d'une part, à un mélangeur symétrique 143 de la voie de formation d'échos de cible et, d'autre part, à un mélangeur symétrique 144 de la voie de formation d'échos de fouillis. Un oscillateur local 141,142, respectivement propre à chaque voie, est relié au mélangeur symétrique correspondant 143, 144 respectivement, et est associé à un circuit de commande automatique de fréquence 145, 146 respectivement. Les oscillateurs locaux 141,142 sont ainsi asservis à l'oscillateur local 44 du radar 4 et permettent de fabriquer indépendamment des échos de cible, dans la première voie et des échos de fouillis dans la deuxième voie.

L'agencement décrit ci-dessus est nécessaire car les signaux d'écho qui sont à la fréquence d'émission du radar doivent être disponibles pendant toute la période de répétititon (qui peut-être par exemple de 8,2 MS pour un type donné de radar). Or, cette fréquence ne peut pas être obtenue par simple prélèvement du signal de magnétron qui n'existe que pendant le seul temps de la largeur d'impulsion. Dans la mesure où, dans l'agencement décrit ci-dessus, on utilise deux oscillateurs locaux 141,142, il est possible de disposer d'une puissance de sortie largement suffisante pour simuler, de façon indépendante, les échos cibles et fouillis.

Sur chaque voie de cible et de fouillis, un filtre 113, respectivement 114, à la fréquence intermédiaire du radar, constitue un générateur de bruit de tension de valeur moyenne nulle et présente une sortie reliée au circuit de commande automatique de fréquence 145, respectivement 146 pour introduire un bruit de phase désiré sur l'oscillateur local correspondant 141, respectivement 142,. le signal de commande issu du convertisseur numérique-analogique 133, respectivement 134, lequel signal de commande décale en fréquence le circuit 145, respectivement 146, de là valeur de doppler désirée qui dépend de la cinématique des éléments mobiles de cible ou de fouillis concernés et se trouve déterminée par le microprocesseur 2.

Pour chaque voie de cible et de fouillis, le signal issu de l'oscillateur local 141, respectivement 142, est combiné par l'intermédiaire d'un circulateur 185, respectivement 186, à des moyens d'interrupteur 175, respectivement 176, commandés par un circuit monostable de durée d'écho 165, respectivement 166, recevant, d'une part, un signal de position de durée d'échos issu de la sortie 56, respectivement 57 du microprocesseur 2 et, d'autre part, un signal de début d'écho fourni par le circuit chronomètre 120.

Pour chaque voie de cible et de fouillis, le circulateur 185, respectivement 186 est lui-même monté en série avec des circulateurs 181,183, respectivement 182,184, associés à des atténuateurs 171,173, respectivement 172,174, commandés par des circuits de commande 161,163, respectivement 162, 164. Le circuit de commande 161 respectivement 162 reçoit les signaux de niveau d'écho issus de l'additionneur 151, respectivement 152, tandis que le circuit de commande 163, respectivement 164, reçoit des signaux fournis par le simulateur de distance 120 et dont la valeur dépend de la loi de distance prise en compte par le circuit chronomètre 120. Pour chaque voie, la porteuse est ainsi modulée à la fois en phase, fréquence, amplitude et durée, de sorte que l'écho simulé est particulièrement proche des conditions réelles de fonctionnement.

Les signaux résultant des différentes voies de cible et de fouillis sont combinés au niveau d'une jonction hybride 180 qui peut être un T magique dans le cas d'une combinaison de deux voies, telle que représentée sur la figure 2. Le signal de sortie combiné au niveau de la jonction hybride 180 est ensuite injecté par la ligne 6 dans la chaîne de réception du radar, par exemple à l'aide d'un coupleur total 190, le radar 4 pouvant être alors, soit en position de réception, soit en position d'émission-réception.

On a représenté sur la figure 2 les circuits atténuateurs comme étant constitués par des diodes pin. Naturellement, d'autres types d'atténuateurs pourraient être utilisés tels que des atténuateurs à déplacement de champ. Dans le cas d'utilisation de diodes pin, il est possible d'utiliser deux à quatre diodes pin par voie de cible ou de fouillis, en combinaison avec un circuit de commande correspondant. Les diodes pin qui déterminent les échos fonctionnent en réflexion, car la durée d'écho est très petite par rapport à la période de répétition. Ce chargement facilite la construction des circuits de commande ou "driver" des diodes pin qui doivent fournir un courant qui peut être compris entre environ 0,1 à 100 mA pendant une durée qui peut être de quelques microsecondes. Toutefois, selon un mode de réalisation avantageux, un atténuateur 170 associé à un circuit de commande 160 relié au circuit chronomètre 120 peut être monté en aval de la jonction hybride 180 afin de constituer un atténuateur commun aux différentes voies. En effet, les lois de simulation de l'atténuation en fonction de la distance varient selon le type d'élément (cible, type de clutter), et pour un même élément, la surface équivalente de l'élément peut varier différemment en deçà et au-delà d'une distance de transition. Cependant, les différents éléments peuvent présenter une composante d'atténuation commun qui peut alors être obtenue par un circuit commun tel que l'atténuateur 170 de la figure 2.

La figure 3 illustre par les courbres A et B, en échelle logarithmique, les lois d'atténuation en fonction de la distance D par rapport au radar, d'une part pour un écho de cible (courbe A), d'autre part, pour un écho de clutter de mer (courbe B). On remarque que, en-dessous d'une distance de transition $D_{tB}$, le niveau de clutter capté par le radar est proportionnel à l'inverse du cube de la distance D (loi de décroissance en $D^{-3}$) tandis qu'au-delà de cette distance $D_{tB}$ de transition, la loi de décroissance est en $D^{-7}$. De même, pour une cible, avant un angle critique correspondant pour une altitude donnée à une distance de transition $Dt_A$, la loi de décroissance est en $D^{-4}$ tandis qu'au-delà de cette distance $Dt_A$, la loi de variation est proportionnalle à $D^{-8}$. Par ailleurs, pour un fond de nuages, la loi d'atténuation peut être en $D^{-2}$. Il ressort de l'exemple cité qu'il est par exemple possible de réaliser dans un simulateur, une atténuation correspondant à $D^{-2}$ à l'aide d'un atténuateur commun tel que le circuit 170 et de combiner cette atténuation avec d'autres atténuateurs disposés dans chaque voie de cible et de fouillis pour réaliser les diverses atténuations désirées.

Bien entendu, diverses modifications et adjonctions peuvent être apportées par l'homme de l'art aux différents dispositifs et procédés qui viennent d'être décrits à titre de simple illustration sans sortir du cadre de l'invention.

## REVENDICATIONS

1. Procédé de simulation d'échos hyperfréquences de cibles en mouvement pour l'observation des échos à l'aide d'un radar à impulsions, procédé selon lequel on produit, d'une part, des signaux simulant les échos provenant d'au moins une cible prédéterminée et, d'autre part, des signaux représentatifs d'au moins un fond tel qu'un fouillis de mer, d'atmosphère ou de terre, caractérisé en ce que, à l'aide des paramètres d'identification de la cible tels que la surface équivalente moyenne, la position initiale, le vecteur vitesse et l'altitude, des paramètres relatifs au fond tels que le type, la position initiale, le vecteur vitesse et la forme du fond, et des données relatives au radar d'observation telles que les caractéristiques de rayonnement de l'antenne et la durée d'impulsion et, le cas échéant, les informations relatives au déplacement du support de radar, on produit en asynchronisme par rapport au radar des premiers signaux numériques caractéristiques de chaque cible et de chaque fond et prenant en compte l'ensemble des paramètres dont la fréquence d'évolution est inférieure à la fréquence de récurrence du radar, en ce que l'on convertit sous forme analogique lesdits premiers signaux numériques pour former des premiers signaux analogiques, en ce que l'on produit directement des seconds signaux analogiques caractéristiques de chaque cible et de chaque fond et prenant en compte l'ensemble des paramètres dont la fréquence d'évolution est supérieure à la fréquence de récurrence du radar, en ce que l'on combine les premiers et seconds signaux analogiques, à une fréquence pilotée par l'oscillateur local hyperfréquence de réception du radar, et en réalisant une synchronisation à partir des signaux de synchronisation d'émission du radar pour former des signaux hyperfréquences de sortie modulés en amplitude, phase et durée et représentatifs des échos de cible et du fond simulés, et en ce que l'on applique les signaux hyperfréquences de sortie à l'antenne du radar lui-même en position de réception ou d'émission-réception.

2. Procédé selon la revendication 1, caractérisé en ce que les premiers signaux numériques comprennent également des signaux prenant en compte des paramètres dont la période d'évolution est voisine de la période de récurrence du radar et en ce que ces signaux sont délivrés lors d'interruptions commandées par les signaux de synchronisation du radar et pris en compte un nombre entier de récurrences plus tard.

3. Procédé selon la revendication 1 ou la revendication 2, caractérisé en ce que l'on synchronise l'émission de signaux hyperfréquences de sortie avec un léger retard, caractéristique de la distance à laquelle se trouvent les échos que l'on doit simuler pendant la récurrence, par rapport à l'émission des impulsions de synchronisation du radar.

4. Simulateur d'échos hyperfréquences de cibles en mouvement pour l'observation des échos à l'aide d'un radar à impulsions qui comprend notamment un oscillateur local de réception, une antenne orientable, des moyens de synchronisation de l'émission et des moyens de visualisation, simulateur, caractérisé en ce qu'il comprend une première chaîne de traitement numérique comprenant un processeur, des mémoires et des circuits d'interface et prévue pour recevoir, d'une part, des données relatives au radar telles que la position de l'antenne, la durée d'impulsions, d'autre part, des données relatives à au moins une cible prédéterminée et à au moins un fond ou fouillis, et pour fournir une pluralité de signaux numériques comprenant, pour chaque cible et chaque fond, au moins un signal de niveau d'écho et un signal de position d'échos ; et une deuxième chaîne de traitement analogique à laquelle sont appliqués, d'une part, les signaux fournis par ladite première chaîne de traitement, et d'autre part, des signaux issus du radar comprenant au moins le signal de synchronisation de l'émission du radar et le signal issu de l'oscillateur local·hyperfréquence de la réception ; et en ce que la deuxième chaîne de traitement analogique comprend des circuits de conversion numérique analogique au moins des signaux numériques de niveau d'écho issus de la première chaîne de traitement ; un circuit chronomètre de simulation de distance auquel sont appliquées les impulsions de synchronisation du radar et destiné à fournir des impulsions de déclenchement des échos ; un générateur de bruit ; des filtres reliés au générateur de bruit pour fournir pour chaque cible et chaque fond au moins  des signaux de bruit d'amplitude ; un oscillateur local hyperfréquence asservi sur l'oscillateur local de réception du radar, pour chaque cible et chaque fond, chaque oscillateur local étant associé à un circuit de commande automatique de fréquence et à un mélangeur couplé à l'oscillateur local de réception du radar ; pour chaque cible et chaque fond, un circuit de combinaison du signal de bruit d'amplitude et du signal de niveau d'écho issu du circuit de conversion numérique-analogique correspondant ; des circuits alternateurs commandés associés à des circuits de commande en fonction de lois de commande prédéterminées pour chaque signal analogique de position et de niveau ; des moyens de couplage du signal de l'oscillateur local correspondant et des signaux analogiques de niveau et de position pour chaque cible et chaque fond ; une jonction hybride pour la combinaison des signaux résultant de chaque voie de la deuxième chaîne de traitement correspondant à une cible ou à un fond et des moyens pour injecter le signal de sortie combiné issu de la jonction hybride dans la chaîne de réception du radar.

5. Simulateur selon la revendication 4, caractérisé en ce que chaque voie de la deuxième chaîne de traitement correspondant à un fond comprend un circuit de commande de durée d'écho de fond recevant un signal, d'une part, de la première chaîne de traitement et, d'autre part, du circuit chronomètre et associé à des moyens d'interrupteur pour interrompre le signal combiné de la voie correspondante en temps prédéterminé après le début d'un écho.

6. Simulateur selon la revendication 4 ou la revendication 5, caractérisé en ce que la deuxième chaîne de traitement comprend en outre, pour chaque voie de cible ou de fond, un filtre générateur de bruit de tension de valeur moyenne nulle dont la sortie est reliée au circuit de commande automatique de fréquence pour introduire un bruit de phase désiré sur l'oscillateur local correspondant, et des moyens de conversion numérique-analogique pour appliquer au circuit de commande automatique de fréquence de l'oscillateur local correspondant, un signal de commande décalant celui-ci en fréquence de la valeur du doppler désiré, la première chaîne de traitement déterminant cette valeur à partir de données d'entrée relatives à la cinématique des éléments mobiles.

7. Simulateur selon l'une quelconque des revendications 4 à 6, caractérisé en ce qu'un circuit atténuateur commun commandé par un circuit de commande relié au circuit chronomètre est disposé en aval de ladite jonction hybride.

8. Simulateur selon l'une quelconque des revendications 4 à 7,
caractérisé en ce que les circuits atténuateurs commandés sont consitutés par des diodes pin et
en ce que lesdits moyens de couplage d'un signal d'oscillateur local et des signaux analogiques correspondants de niveau, de position d'écho et, le cas échéant de durée d'écho comprennent des circuits circulateurs.

Fig-1

Fig-3

Fig_2

**0042785**
Numéro de la demande

**Office européen des brevets**

**RAPPORT DE RECHERCHE EUROPEENNE**

EP 81 40 0951

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | NATO/OTAN AGARD. CONFERENCE PROCEEDINGS, no. 67, 1970 LONDRES (GB) Symposium On Data Handling Devices ISTANBUL 1-4 juin 1970 DE JONG: "Input Communication on a System for Target Simulation", pages 22-1 à 21-8. * en entier * | 1,4 | G 01 S 7/40 G 06 F 15/20 G 06 G 7/78 G 09 B 9/00 |
| | -- | | |
| | GB - A - 2 017 445 (WESTINGHOUSE) | 1-4 | **DOMAINES TECHNIQUES RECHERCHES (Int. Cl.³)** |
| | * page de garde: le résumé; page 1, ligne 109 à page 3, ligne 128 * | | G 01 S 7/40 G 06 F 15/20 G 06 G 7/78 G 01 R 31/28 G 09 B 9/00 |
| | -- | | |
| | GB - A - 1 548 528 (MARCONI) | 1,4 | |
| | * page 1, ligne 14 à page 2, ligne 127 * | | |
| | -- | | |
| | US - A - 3 792 475 (SMETANA) | 1,4,8 | |
| | * en entier * | | |
| | -- | | **CATEGORIE DES DOCUMENTS CITES** |
| | US - A - 4 085 524 (MEYER) | 1,4 | X: particulièrement pertinent |
| | * page de garde; le résumé; colonne 1, ligne 36 à colonne 2, ligne 18 * | | A: arrière-plan technologique O: divulgation non-écrite P: document intercalaire T: théorie ou principe à la base de l'invention E: demande faisant interférence D: document cité dans la demande L: document cité pour d'autres raisons |
| | ./.. | | |

&: membre de la même famille, document correspondant

Le présent rapport de recherche a été établi pour toutes les revendications

| Lieu de la recherche | Date d'achèvement de la recherche | Examinateur |
|---|---|---|
| La Haye | 27.08.1981 | OLDROYD |

OEB Form 1503.1   06.78

**Office européen des brevets**

**RAPPORT DE RECHERCHE EUROPEENNE**

| Catégorie | DOCUMENTS CONSIDERES COMME PERTINENTS | | CLASSEMENT DE LA DEMANDE (Int. Cl. 3) |
|---|---|---|---|
| | Citation du document avec indication, en cas de besoin, des parties pertinentes | Revendication concernée | |
| | US - A - 3 332 078 (CONRAD)<br>* colonne 1, lignes 10-68;<br>colonne 2, lignes 5-50 * | 1,4 | |
| | US - A - 4 204 342 (LINFIELD)<br>* page de garde: le résumé; colonne 1, ligne 32 à colonne 2, ligne 27; colonne 5, ligne 39 à colonne 7, ligne 28; colonne 11, ligne 42 à colonne 13, ligne 5 * | 1,4 | DOMAINES TECHNIQUES RECHERCHES (Int. Cl. 3) |
| P | EP - A - 0 015 114 (MARCONI)<br>* en entier * | 1,4 | |

OEB Form 1503.2 06.78